# EUROPEAN PATENT APPLICATION

(11) **EP 4 604 568 A1**
(43) Date of publication of application: **20.08.2025**
(21) Application number: 23891815.5
(22) Date of filing: 04.10.2023
(51) Int. Cl.: H04N 23/951, H04N 23/958, H04N 5/272, G06T 5/50, G06T 7/13

(54) **ELECTRONIC DEVICE AND METHOD FOR INCREASING RESOLUTION OF DIGITAL BOKEH IMAGE**

(30) Priority: 18.11.2022 KR 20220155859; 01.12.2022 KR 20220166035
(71) Applicant: Samsung Electronics Co., Ltd., Suwon-si, Gyeonggi-do 16677 (KR)
(72) Inventor: JUNG, Yumin, Suwon-si Gyeonggi-do 16677 (KR); KIM, Junghun, Suwon-si Gyeonggi-do 16677 (KR); KIM, Pyojae, Suwon-si Gyeonggi-do 16677 (KR); IM, Sunwoong, Suwon-si Gyeonggi-do 16677 (KR); SUBASH, Pandey, Suwon-si Gyeonggi-do 16677 (KR); LEE, Dasom, Suwon-si Gyeonggi-do 16677 (KR)
(74) Representative: HGF
(86) International application number: PCT/KR2023/015267
(87) International publication number: WO 2024/106746

(57) **Abstract**

According to one embodiment, an electronic device may include at least one processor and at least one camera. The at least one processor may acquire an image through the at least one camera. The at least one processor may generate a depth map including depth data corresponding to a plurality of objects. The at least one processor may receive a user input for identifying an object that will not be blurred from among the plurality of objects. The at least one processor may identify an improvement area on the basis of the object and the depth map corresponding to the user input. The at least one processor may identify a focus area on the basis of the object and the depth map corresponding to the user input. The at least one processor may generate an output image on the basis of a synthesis of the focus area and a portion of the image excluding the focus area.

## Description

### [Technical Field]

Embodiments of the present disclosure relate to an electronic device and a method for increasing resolution of a digital bokeh image.

### [Background Art]

With miniaturization of a smartphone, a thickness of a camera module has decreased. Importance of digital bokeh technology has increased due to a decrease in the thickness of the camera module. Digital bokeh is technology that synthesizes a background region image that is processed with blur processing and an object region image corresponding to a subject, by separating the subject and a background.

The above-described information may be provided as a related art for the purpose of helping understanding of the present disclosure. No claim or determination is raised as to whether any of the above-described descriptions may be applied as a prior art related to the present disclosure.

### [Disclosure]

### [Technical Solution]

In embodiments, an electronic device is provided. The electronic device may comprise at least one processor and at least one camera. The at least one processor may be configured to obtain an image via the at least one camera. The at least one processor may be configured to generate a depth map including depth data corresponding to a plurality of objects. The at least one processor may be configured to receive a user input for identifying an object not to be processed with blur processing among the plurality of objects. The at least one processor may be configured to identify an improvement region based on the object corresponding to the user input and the depth map. The at least one processor may be configured to identify a focus region based on the object corresponding to the user input and the depth map. The at least one processor may be configured to identify whether blur information of the improvement region is equal to or greater than a reference value. The at least one processor may be configured to perform image processing to reduce the blur information of the improvement region based on the blur information being equal to or greater than the reference value. The at least one processor may be configured to perform blur processing on a portion of the image where the focus region is excluded. The at least one processor may be configured to generate an output image based on a composite of the portion of the image where the focus region is excluded and the focus region.

In embodiments, a method performed by an electronic device is provided. The method may comprise obtaining an image via at least one camera. The method may comprise generating a depth map including depth data corresponding to a plurality of objects. The method may comprise receiving a user input for identifying an object not to be processed with blur processing among the plurality of objects. The method may comprise identifying an improvement region based on the object corresponding to the user input and the depth map. The method may comprise identifying a focus region based on the object corresponding to the user input and the depth map. The method may comprise identifying whether blur information of the improvement region is equal to or greater than a reference value. The method may comprise performing image processing to reduce the blur information of the improvement region, based on the blur information being equal to or greater than the reference value. The method may comprise performing blur processing on a portion of the image where the focus region is excluded. The method may comprise generating an output image based on a composite of the portion of the image where the focus region is excluded and the focus region.

In embodiments, an electronic device is provided. The electronic device may include memory configured to store instructions, at least one processor, and at least one camera. The instructions, when executed by the at least one processor, may cause the electronic device to obtain an image via the at least one camera, generate a depth map including depth data corresponding to a plurality of objects, receive a user input for identifying an object not to be processed with blur processing among the plurality of objects, identify an improvement region based on the object corresponding to the user input and the depth map, identify a focus region based on the object corresponding to the user input and the depth map, identify whether blur information of the improvement region is equal to or greater than a reference value, perform image processing to reduce the blur information of the improvement region based on the blur information being equal to or greater than the reference value, perform blur processing on a portion of the image where the focus region is excluded, and generate an output image based on a composite of the portion of the image where the focus region is excluded and the focus region.

In embodiments, a non-transitory computer-readable medium is provided. The non-transitory computer-readable medium may include memory configured to store instructions. The instructions, when executed by the at least one processor, may cause the electronic device to obtain an image via the at least one camera, generate a depth map including depth data corresponding to a plurality of objects, receive a user input for identifying an object not to be processed with blur processing among the plurality of objects, identify an improvement region based on the object corresponding to the user input and the depth map, identify a focus region based on the object corresponding to the user input and the depth map, identify whether blur information of the improvement region is equal to or greater than a reference value, perform image processing to reduce the blur information of the improvement region based on the blur information being equal to or greater than the reference value, perform blur processing on a portion of the image where the focus region is excluded, and generate an output image based on a composite of the portion of the image where the focus region is excluded and the focus region.

### [Description of the Drawings]

FIG. 1 is a block diagram of an electronic device in a network environment, according to embodiments.
FIG. 2 is a block diagram illustrating a camera module according to various embodiments.
FIG. 3 illustrates an example of digital bokeh according to embodiments.
FIG. 4 illustrates an example of an output image generated without an image processing process for reducing blur information, according to embodiments.
FIG. 5 illustrates an example of a depth map according to embodiments.
FIG. 6 illustrates an example of a reference distance range for identifying blur information of a focus region, according to embodiments.
FIG. 7 illustrates a flow of an operation of an electronic device for generating an output image based on blur information of a focus region, according to embodiments.
FIG. 8 illustrates a flow of an operation of an electronic device for identifying blur information when obtaining an image, according to embodiments.
FIG. 9 illustrates a flow of an operation of an electronic device for performing digital bokeh when obtaining an image, according to embodiments.
FIG. 10 illustrates a flow of an operation of an electronic device for performing digital bokeh after obtaining an image, according to embodiments.

### [Mode for Invention]

Terms used in the present disclosure are used only to describe a specific embodiment, and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since the various embodiments of the present disclosure include technology that uses both hardware and software, the various embodiments of the present disclosure do not exclude a software-based approach.

A term referring to montaging (e.g., montaging, merging, or a combination), a term referring to a part of the image (e.g., an image region), a term referring to a part of the obtained image (an improvement area, a region for improvement, or a region for resolution enhancement), a term referring to a specified value (a reference value, or a threshold value), and the like, that are used in the following description, are exemplified for convenience of explanation. Therefore, the present disclosure is not limited to terms to be described below, and another term having an equivalent technical meaning may be used. In addition, a term such as '...unit, '...device, '...object', and '...structure', and the like used below may mean at least one shape structure or may mean a unit processing a function.

In addition, in the present disclosure, the term 'greater than" or 'less than" may be used to determine whether a particular condition is satisfied or fulfilled, but this is only a description to express an example and does not exclude description of 'greater than or equal to' or 'less than or equal to'. A condition described as 'greater than or equal to ' may be replaced with 'greater than', a condition described as 'less than or equal to' may be replaced with 'less than', and a condition described as ' greater than or equal to and less than' may be replaced with 'greater than and less than or equal to'. In addition, hereinafter, 'A' to 'B' refers to at least one of elements from A (including A) to B (including B). Hereinafter, 'C' and/or 'D' means including at least one of 'C' or 'D', that is, {'C', 'D', and 'C' and 'D'}.

Prior to describing embodiments of the present disclosure, terms necessary to describe operations of an electronic device according to embodiments are defined. An object may be a portion within an image corresponding to a subject. An improvement region, which is a target of image processing for improving resolution, may be a portion of the image around the object. The object may be designated by a user input. An improvement object may be a portion of the image included in the improvement region. A focus region may be a portion of the image that does not perform blur processing when digital bokeh is applied. A focus object may be a portion of the image included in the focus region. Blur information may be an index indicating how blurred a portion of the image is. A depth map may include depth data corresponding to a plurality of objects within the image.

Hereinafter, various embodiments disclosed in the present document will be described with reference to the accompanying drawings. For convenience of description, components illustrated in the drawings may be exaggerated or reduced in size, and the present invention is not necessarily limited to what is illustrated.

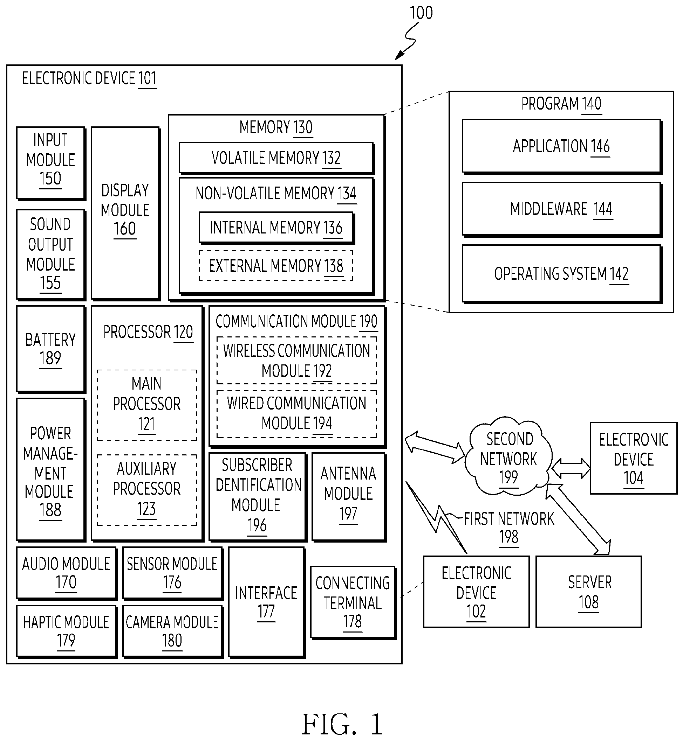

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an **HDMI** connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

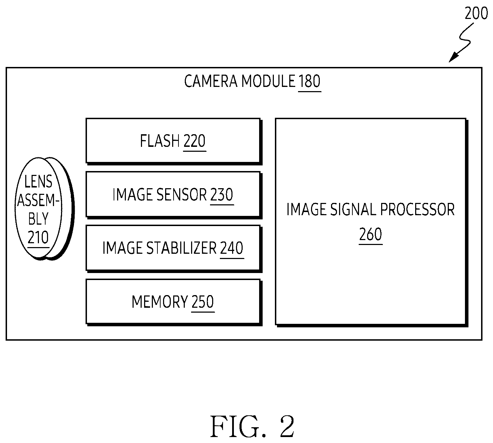

Fig. 2 is a block diagram 200 illustrating the camera module 180 according to various embodiments. Referring to Fig. 2, the camera module 180 may include a lens assembly 210, a flash 220, an image sensor 230, an image stabilizer 240, memory 250 (e.g., buffer memory), or an image signal processor 260. The lens assembly 210 may collect light emitted or reflected from an object whose image is to be taken. The lens assembly 210 may include one or more lenses. According to an embodiment, the camera module 180 may include a plurality of lens assemblies 210. In such a case, the camera module 180 may form, for example, a dual camera, a 360-degree camera, or a spherical camera. Some of the plurality of lens assemblies 210 may have the same lens attribute (e.g., view angle, focal length, auto-focusing, f number, or optical zoom), or at least one lens assembly may have one or more lens attributes different from those of another lens assembly. The lens assembly 210 may include, for example, a wide-angle lens or a telephoto lens.

The flash 220 may emit light that is used to reinforce light reflected from an object. According to an embodiment, the flash 220 may include one or more light emitting diodes (LEDs) (e.g., a red-green-blue (RGB) LED, a white LED, an infrared (IR) LED, or an ultraviolet (UV) LED) or a xenon lamp. The image sensor 230 may obtain an image corresponding to an object by converting light emitted or reflected from the object and transmitted via the lens assembly 210 into an electrical signal. According to an embodiment, the image sensor 230 may include one selected from image sensors having different attributes, such as a RGB sensor, a black-and-white (BW) sensor, an IR sensor, or a UV sensor, a plurality of image sensors having the same attribute, or a plurality of image sensors having different attributes. Each image sensor included in the image sensor 230 may be implemented using, for example, a charged coupled device (CCD) sensor or a complementary metal oxide semiconductor (CMOS) sensor.

The image stabilizer 240 may move the image sensor 230 or at least one lens included in the lens assembly 210 in a particular direction, or control an operational attribute (e.g., adjust the read-out timing) of the image sensor 230 in response to the movement of the camera module 180 or the electronic device 101 including the camera module 180. This allows compensating for at least part of a negative effect (e.g., image blurring) by the movement on an image being captured. According to an embodiment, the image stabilizer 240 may sense such a movement by the camera module 180 or the electronic device 101 using a gyro sensor (not shown) or an acceleration sensor (not shown) disposed inside or outside the camera module 180. According to an embodiment, the image stabilizer 240 may be implemented, for example, as an optical image stabilizer. The memory 250 may store, at least temporarily, at least part of an image obtained via the image sensor 230 for a subsequent image processing task. For example, if image capturing is delayed due to shutter lag or multiple images are quickly captured, a raw image obtained (e.g., a Bayer-patterned image, a high-resolution image) may be stored in the memory 250, and its corresponding copy image (e.g., a low-resolution image) may be previewed via the display module 160. Thereafter, if a specified condition is met (e.g., by a user's input or system command), at least part of the raw image stored in the memory 250 may be obtained and processed, for example, by the image signal processor 260. According to an embodiment, the memory 250 may be configured as at least part of the memory 130 or as a separate memory that is operated independently from the memory 130.

The image signal processor 260 may perform one or more image processing with respect to an image obtained via the image sensor 230 or an image stored in the memory 250. The one or more image processing may include, for example, depth map generation, three-dimensional (3D) modeling, panorama generation, feature point extraction, image synthesizing, or image compensation (e.g., noise reduction, resolution adjustment, brightness adjustment, blurring, sharpening, or softening). Additionally or alternatively, the image signal processor 260 may perform control (e.g., exposure time control or read-out timing control) with respect to at least one (e.g., the image sensor 230) of the components included in the camera module 180. An image processed by the image signal processor 260 may be stored back in the memory 250 for further processing, or may be provided to an external component (e.g., the memory 130, the display module 160, the electronic device 102, the electronic device 104, or the server 108) outside the camera module 180. According to an embodiment, the image signal processor 260 may be configured as at least part of the processor 120, or as a separate processor that is operated independently from the processor 120. If the image signal processor 260 is configured as a separate processor from the processor 120, at least one image processed by the image signal processor 260 may be displayed, by the processor 120, via the display module 160 as it is or after being further processed.

According to an embodiment, the electronic device 101 may include a plurality of camera modules 180 having different attributes or functions. In such a case, at least one of the plurality of camera modules 180 may form, for example, a wide-angle camera and at least another of the plurality of camera modules180 may form a telephoto camera. Similarly, at least one of the plurality of camera modules 180 may form, for example, a front camera and at least another of the plurality of camera modules180 may form a rear camera.

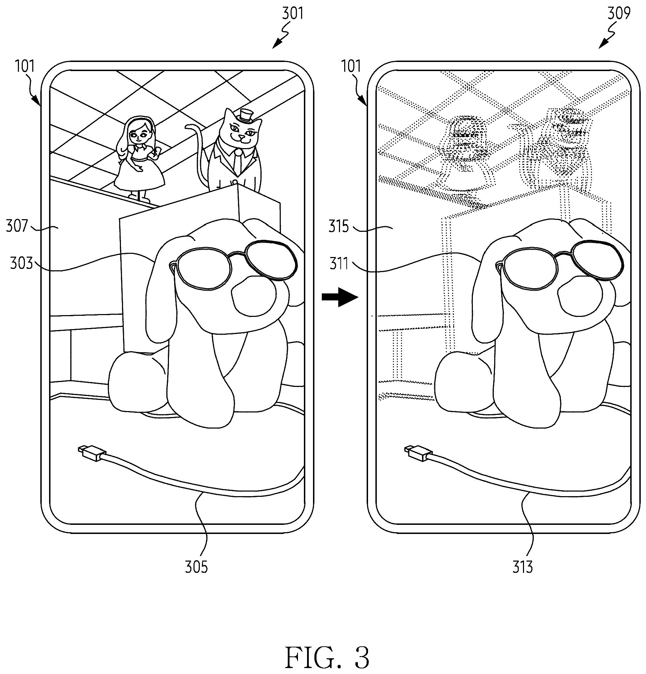

FIG. 3 illustrates an example of digital bokeh according to embodiments.

Referring to FIG. 3, according to an embodiment, a first image 301 may be an image obtained through a camera. The first image 301 may include a first object 303, a second object 305, and a background region 307. The first object 303 may be a portion of the image corresponding to a puppy doll. The second object 305 may be a portion of the image corresponding to a universal serial bus (USB) port cable. The background region 307 may be a portion of the image excluding the first object 303 and the second object 305. A second image 309 may be an output image obtained through digital bokeh processing with respect to the first image 301. The second image 309 may include a first object 311, a second object 313, and a background region 315. The first object 311 may be a portion of the image corresponding to the puppy doll. The second object 313 may be a portion of the image corresponding to the USB port cable. The background region 315 may be a portion of the image excluding the first object 311 and the second object 313.

According to an embodiment, the at least one processor (e.g., the processor 120 of FIG. 1) may obtain an image including a plurality of objects through a camera (e.g., the camera module 180 of FIG. 1). For example, the at least one processor 120 may obtain the image including the first object 303, the second object 305, and the background region 307.

According to an embodiment, the at least one processor 120 may generate a depth map including depth data corresponding to the plurality of objects. For example, the at least one processor 120 may obtain the depth map including depth data corresponding to the first object 303, depth data corresponding to the second object 305, and depth data corresponding to objects in the background region 307. The at least one processor 120 may obtain depth data corresponding to the plurality of objects included in the image through the depth map. The depth data may be a distance from a subject corresponding to the object to an electronic device (e.g., the electronic device 101 of FIG. 1) including the camera 180. The depth data may be obtained through a depth sensor. For example, the at least one processor 120 may transmit a first signal to obtain the depth data through the depth sensor. The at least one processor 120 may receive at least a portion of a second signal in which the transmitted first signal is reflected by one of the plurality of objects, through the depth sensor. The depth sensor may be a time of flight (TOF) sensor. For example, the depth data may be obtained based on images obtained from a plurality of cameras. The at least one processor 120 may obtain a first image from a first camera. The at least one processor 120 may obtain a second image from a second camera. The at least one processor 120 may obtain the depth data corresponding to the plurality of objects by comparing the first image and the second image. As a subject is closer to the electronic device 101, a difference between a location of an object corresponding to a subject in the first image and a location of the object corresponding to the subject in the second image may be greater as compared to a subject far from the electronic device 101. For example, the depth data may be identified based on the image obtained through a single camera. The at least one processor 120 may obtain the depth data from the image through the convolution neural network (CNN). However, embodiments of the present disclosure are not limited thereto.

According to an embodiment, the at least one processor 120 may receive a user input for identifying an object not to be processed with blur processing among the plurality of objects. For example, the user may touch a region on a display corresponding to the first object 303. The first object 303 may be designated as an object among the plurality of objects included in the image 301 not to be processed with the blur processing. The first object 303 may be designated as an object that seems to be in focus in digital bokeh. The digital bokeh may be an image processing method that performs blur processing on a portion of the obtained image to represent the image as if only a portion of the objects within the image are in focus.

According to an embodiment, the at least one processor 120 may identify an improvement region based on the object corresponding to the user input and the depth map. The improvement region may include the object and an improvement object. The improvement region may be a portion of the image on which image processing is performed to increase resolution. Performing the image processing on the improvement region is for outputting a high-resolution image for another subject near the subject corresponding to the object. In addition, time efficiency may be secured by performing image processing to increase resolution for a partial region rather than the entire image. This is because the at least one processor 120 may perform blur processing on a portion of a portion of the image excluding the improvement region for a bokeh effect. In other words, since image processing to increase resolution may not be performed on the portion of the image to be processed with blur processing, the at least one processor 120 may secure time efficiency by performing image processing to increase resolution on the improvement region. The at least one processor 120 may identify a distance of the object corresponding to the received user input based on the depth map. The at least one processor 120 may identify the improvement object. A difference between the distance from the subject corresponding to the object to the electronic device 101 and a distance from a subject corresponding to the improvement object to the electronic device 101 may be less than a second designated distance.

For example, the at least one processor 120 may identify a distance between the first object 303 corresponding to the user input and the electronic device 101 based on the depth map. The at least one processor 120 may identify the improvement object, in which a difference between a distance from the puppy doll corresponding to the first object 303 to the electronic device 101 and the distance from the subject corresponding to the improvement object to the electronic device 101 is less than the second designated distance. A difference between the distance from the puppy doll corresponding to the first object 303 to the electronic device 101 and a distance from the USB port cable corresponding to the second object 305 to the electronic device 101 may be less than the second designated distance. The second object 305 may be the improvement object. The improvement region may include the first object 303 and the second object 305. The at least one processor 120 may identify the improvement region based on the first object 303 corresponding to the user input and the second designated distance to implement a natural bokeh image.

According to an embodiment, the at least one processor 120 may determine whether the blur information of the improvement region is equal to or greater than a reference value.

According to an embodiment, the at least one processor 120 may identify blur information based on an edge characteristic of a pixel included in the image. The blur information may include a degree of blur. An edge may be an index indicating how diverse a color change is compared to an adjacent pixel. A value of the edge may be greater as the color change is more diverse compared to the adjacent pixel. The edge characteristic may include an intensity of the edge and consistency of an edge direction. The at least one processor 120 may identify the intensity of the edge included in the pixel and the consistency of the edge direction. The intensity of the edge may be an index indicating how many edges having a large change between a corresponding pixel and the adjacent pixel are included. As the color change between adjacent pixels is greater, the intensity of the edge may be greater. As the number of pixels having diverse color changes increases, the edge included in the corresponding pixel and the adjacent pixel may be greater. Accordingly, the intensity of the edge of the corresponding pixel may be determined according to magnitude of gradients of the corresponding pixel. The intensity of the edge may be identified based on magnitude of the gradients in a first direction of the pixel included in the image and the adjacent pixel, and magnitude of the gradients in a second direction perpendicular to the first direction. As the magnitude of the gradients in the first direction and the magnitude of the gradients in the second direction are greater, the degree of blur may be lower. The consistency of the edge direction may be an index indicating how consistently the edges included in the corresponding pixel and the adjacent pixel face same direction. The edge direction may be orthogonal to the gradients. Therefore, when the direction of the gradients is consistent, the edge direction may also be consistent. The consistency of the edge direction may be identified according to distribution of the gradients in the first direction of the pixel and the adjacent pixel and distribution of the gradients in the second direction perpendicular to the first direction. As the consistency of the gradients in the first direction is greater, the consistency of the edge direction may be higher. As the consistency of the gradients in the second direction is greater, the consistency with the edge direction may be higher. As the consistency of the edge direction is higher, the degree of blur may be higher. As the consistency of the edge direction is higher, a probability that the corresponding blur is generated by movement of the subject may be higher.

According to an embodiment, the at least one processor 120 may identify blur information based on the distance of the object. When the subject corresponding to the object is within a first reference distance range, sharpness of the object having a distance within the first distance range may be equal to or greater than a designated value. When the subject corresponding to the object is outside the first reference distance range, sharpness of the object having a distance outside the first distance range may be less than the designated value. When the distance of the object corresponding to the user input from the electronic device 101 is within the first reference distance range, the at least one processor 120 may identify the blur information of the improvement region to be less than the reference value. When the distance of the object corresponding to the user input from the electronic device 101 is outside the first reference distance range, the at least one processor 120 may identify the blur information of the improvement region to be equal to or greater than the reference value. The first reference distance range may be identified based on a depth of field and a distance from the subject in focus to the electronic device 101. The distance of the object may be a distance from the subject corresponding to the object to the electronic device 101. The first reference distance range may be identified based on an aperture value, a focal length of the camera in use, and the distance between the subject in focus and the electronic device 101. For example, as an amount of light passed by the aperture increases, the first reference distance range may be narrower. In other words, when a f-number of the aperture is lowered, the first reference distance range may be narrower. For example, as the focal length of the camera in use increases, the first reference distance range may be narrower. In other words, as the camera has higher magnification, the first reference distance range may be narrower. For example, the distance between the subject in focus and the electronic device 101 increases, the first reference distance range may be wider. In other words, the first reference distance range may be wider as the focus is on an object far from the electronic device.

According to an embodiment, the at least one processor 120 may perform image processing to reduce the blur information on the improvement region based on the blur information equal to or greater than the reference value. The at least one processor 120 may perform the image processing to reduce the blur information through a neural network. The image processing to reduce the blur information on the improvement region may be executed through a central processing unit (CPU), a neural processing unit (NPU), or a graphics processing unit (GPU).

According to an embodiment, the at least one processor 120 may identify a focus region based on the object corresponding to the user input and the depth map. The focus region may include the object and a focus object. The at least one processor 120 may identify a distance of the object corresponding to the received user input based on the depth map. The at least one processor 120 may identify the focus object. A difference between the distance from the subject corresponding to the object to the electronic device 101 and a distance from a subject corresponding to the focus object to the electronic device 101 may be less than a first designated distance. For example, the at least one processor 120 may identify the distance between the first object 303 corresponding to the user input and the electronic device 101 based on the depth map. The at least one processor 120 may identify the focus object in which a difference between the distance from the puppy doll corresponding to the first object 303 to the electronic device 101 and the distance from the subject corresponding to the focus object to the electronic device 101 is less than the first designated distance. A difference between the distance from a puppy doll corresponding to the first object 303 to the electronic device 101 and the distance from the USB port cable corresponding to the second object 305 to the electronic device 101 may be less than the first designated distance. The second object 305 may be the focus object. The focus object included in the focus region may be identified as an object not to be performed with blur processing among the plurality of objects included in the image 301. The focus object may be identified as an object that seems to be in focus in the digital bokeh. The focus region may include the first object 303 and the second object 305. The at least one processor 120 may identify the focus region based on the first object 303 corresponding to the user input and the first designated distance to implement a natural bokeh image.

According to an embodiment, the at least one processor 120 may perform blur processing on a portion of the image where the focus region is excluded. The at least one processor 120 may generate an output image by compositing the portion of the image where the focus region is excluded and the focus region. For example, the at least one processor 120 may perform blur processing on the background region 307 where the focus region is excluded. The at least one processor 120 may generate the second image 309 that is an output image by compositing the focus region with the background region 315 processed with the blur processing. The focus region may include the first object 311 and the second object 313.

According to an embodiment, the at least one processor 120 may perform blur processing with a stronger intensity on an object corresponding to a subject whose distance to the electronic device 101 is farther. An intensity of the blur processing may be a degree of blur. As the intensity of the blur processing is stronger, the image processed with the blur processing may be represented as blurry. For example, the image processed with the blur processing with a first intensity may be blurrier compared to the image processed with the blur processing with a second intensity smaller than the first intensity. For example, the at least one processor 120 may perform the blur processing on a first subject corresponding to a first image portion with the first intensity. The at least one processor 120 may perform the blur processing on a second subject corresponding to a second image portion with the second intensity smaller than the first intensity. The first subject may be separated from the electronic device 101 by a first distance. The second subject may be separated from the electronic device 101 by a second distance. The first distance may be greater than the second distance.

According to an embodiment, the at least one processor 120 may generate an output image 309 to which the bokeh effect is applied through software processing without changing an optical setting of the camera.

According to an embodiment, the at least one processor may display a notification for displaying whether applying the digital bokeh effect is possible through a display. For example, the at least one processor 120 may generate the depth map including the depth data corresponding to the plurality of objects while obtaining the image through the at least one camera. The at least one processor 120 may identify whether the distance of the object is outside a second reference distance range. The at least one processor 120 may display a notification for indicating a difficulty of applying the bokeh effect based on identifying whether the distance of the object is outside the second reference distance range. The second reference distance range may be set to identify a case in which the resolution is difficult to increase to equal to or greater than a designated value, even though the image processing for increasing the resolution is performed. Even though the image processing for increasing the resolution is performed on an object corresponding to a subject locationed outside the second reference distance range, the resolution may not increase to equal to or greater than the designated value. The distance of the object may be a distance from a subject corresponding to the object to the electronic device 101. The second reference distance range may include the first reference distance range.

According to an embodiment, the at least one processor 120 may obtain the image through the at least one camera. The at least one processor 120 may identify the distance of the object in the image obtained through the at least one camera. The at least one processor 120 may display a notification based on identifying whether the distance of the object is outside the first reference distance range and is within the second reference distance range. The notification may indicate that image processing is required for resolution improvement when applying the bokeh effect. This is because the image processing is required for the resolution improvement when the distance of the object is outside the first reference distance range. The image processing for the resolution improvement may be performed to increase performance of the digital bokeh effect. When the distance of the object is within the second reference distance range, if the image processing for the resolution improvement is performed, resolution of the object may be less than the designated value. The at least one processor 120 may indicate the notification for indicating the difficulty of applying the bokeh effect based on identifying whether the distance of the object is outside the second reference distance range. This is because even though image processing for increasing resolution is performed on the object corresponding to the subject locationed outside the second reference distance range, the resolution may not increase to equal to or greater than the designated value. The distance of the object may be the distance from the subject corresponding to the object to the electronic device 101. The second reference distance range may include the first reference distance range.

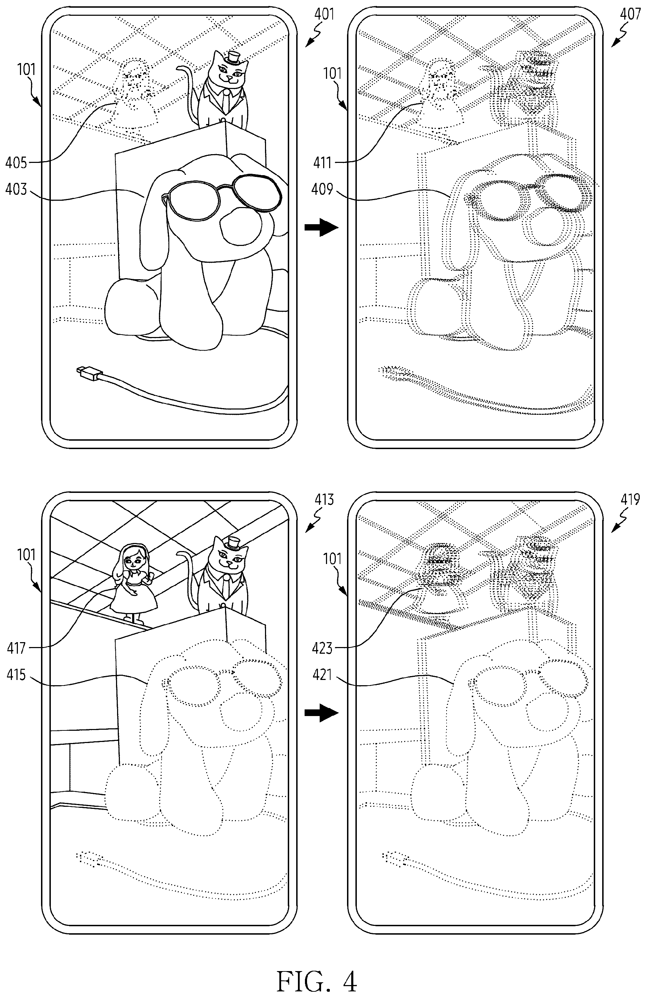

FIG. 4 illustrates an example of an output image generated without an image processing process for reducing blur information, according to embodiments.

Referring to FIG. 4, according to an embodiment, an electronic device (e.g., the electronic device 101 of FIG. 1) may obtain a first image 401 and a second image 407 through a camera (e.g., the camera module 180 of FIG. 1). The first image 401 may be obtained by focusing on and photographing a first object 403. The first image 401 may include the first object 403 and a second object 405. The first object 403 may be a portion of the first image 401 corresponding to a puppy doll. The second object 405 may be a portion of the first image 401 corresponding to a human-shaped doll. The second image 407 may be an output image obtained through digital bokeh processing with respect to the first image 401. The second image 407 may include a first object 409 and a second object 411. The first object 409 may be a portion of the second image 407 corresponding to the puppy doll. The second object 411 may be a portion of the second image 407 corresponding to the human-shaped doll. The second image 407 may include the second object 411 in a focus region.

According to an embodiment, the electronic device 101 may obtain a third image 413 and a fourth image 419 through a camera 180. The third image 413 may be obtained by focusing on and photographing the second object 417. The third image 413 may include a first object 415 and the second object 417. The first object 415 may be a portion of the third image 413 corresponding to the puppy doll. The second object 417 may be a portion of the third image 413 corresponding to the human-shaped doll. The fourth image 419 may be an output image obtained through digital bokeh processing with respect to the third image 413. The fourth image 419 may include a first object 421 and a second object 423. The first object 421 may be a portion of the fourth image 419 corresponding to the puppy doll. The second object 423 may be a portion of the fourth image 419 corresponding to the human-shaped doll. The fourth image 419 may include the first object 421 in a focus region.

According to an embodiment, the second object 405 may be photographed blurry due to an optical cause. For example, at least one processor (e.g., the processor 120 of FIG. 1) may obtain the first image 401 by focusing on and photographing the first object 403. The second object 405 may be photographed blurry, out of a depth of field. When a lens focuses on a specific subject, another subject within a certain distance range from the subject may also be focused. The depth of field may be the certain distance range in which the other subject is also focused. A distance between the electronic device 101 and a subject corresponding to the second object 405 may be out of the depth of field. Since the subject corresponding to the second object 405 is at a location outside the depth of field, the second object 405 may be blurred.

According to an embodiment, the at least one processor 120 may generate a depth map including depth data corresponding to a plurality of objects. For example, the at least one processor 120 may obtain a depth map including depth data corresponding to the first object 403 and depth data corresponding to the second object 405. The depth data may be a distance from a subject corresponding to the object to the electronic device 101 including the camera 180. The at least one processor 120 may receive a user input for identifying an object not to be performed with blur processing among the plurality of objects. For example, the user may touch a region on a display corresponding to the second object 405. The at least one processor 120 may identify a focus region based on the second object 405 corresponding to the user input and the depth map. The focus region may include the object and a focus object. For example, the focus region may include an object corresponding to the second object 405 and a partition wall at which the second object 405 is locationed.

According to an embodiment, the at least one processor 120 may perform blur processing on a portion of the image where the focus region is excluded. The at least one processor 120 may generate an output image by compositing the portion of the image where the focus region is excluded and the focus region. For example, the focus region may include the second object 405. For example, the at least one processor 120 may perform the blur processing on the portion of the image where the focus region is excluded. The at least one processor 120 may generate the second image 407 that is an output image by compositing the portion of the image where the focus region is excluded processed with the blur processing, and the focus region. The focus region may include the second object 405. The output image may be the second image 407. However, even when the blur processing for a digital bokeh effect is not performed on the second object 411, the second object 411 may be blurred. This is because the second object 411 may be out of the depth of field. When the second object 411 is blurred in the second image 407, the digital bokeh effect may not be implemented. This is because the digital bokeh effect is relatively easily implemented as a difference between sharpness of the focus region and sharpness of the portion of the image where the focus region is excluded increases. If a degree of blur between the first object 409 and the second object 411 is similar, it may be difficult to implement the digital bokeh effect. Therefore, the at least one processor 120 may perform image processing around an improvement region to lower the degree of blur by improving resolution of the focus region.

According to an embodiment, the first object 415 may be photographed blurry due to an optical cause. For example, the at least one processor 120 may obtain the third image 413 by focusing on and photographing the second object 417. The first object 415 may be photographed blurry, out of the depth of field. When the lens focuses on the specific subject, the other subject in the certain distance range from the subject may also be focused. The depth of field may be the certain distance range in which the other subjects are also focused. The distance between the electronic device 101 and a subject corresponding to the first object 415 may be out of the depth of field. Since the subject corresponding to the first object 415 is locationed out of the depth of field, the first object 415 may be blurred.

According to an embodiment, the at least one processor 120 may generate the depth map including the depth data corresponding to the plurality of objects. For example, the at least one processor 120 may obtain the depth map including the depth data corresponding to the first object 415 and the depth data corresponding to the second object 417. The depth data may be the distance from the subject corresponding to the object to the electronic device 101 including the camera 180. The at least one processor 120 may receive the user input for identifying the object not to be processed with the blur processing among the plurality of objects. For example, the user may touch a region on the display corresponding to the first object 415. The at least one processor 120 may identify a focus region based on the first object 415 corresponding to the user input and the depth map. The focus region may include the first object 415 and a focus object. For example, the focus region may include an object corresponding to the first object 415 and an object corresponding to a USB port cable next to the first object 415.

According to an embodiment, the at least one processor 120 may perform the blur processing on the portion of the image where the focus region is excluded. The at least one processor 120 may generate the output image by compositing the portion of the image where the focus region is excluded and the focus region. For example, the focus region may include the first object 415. For example, the at least one processor 120 may perform the blur processing on the portion of the image where the focus region is excluded. The at least one processor 120 may generate the fourth image 419 that is the output image by compositing the portion of the image where the focus region is excluded processed with the blur processing and the focus region. The focus region may include the first object 421. The portion of the image where the focus region is excluded may include the second object 423. The output image may be the fourth image 419. However, even when the blur processing for the digital bokeh effect is not performed on the first object 421, the first object 421 may be blurred. The is because the first object 421 may be out of the depth of field. When the first object 421 is blurred in the fourth image 419, the digital bokeh effect may not be implemented. This is because the digital bokeh effect is relatively easily implemented as the difference between the sharpness of the focus region and the sharpness of the portion of the image where the focus region is excluded increases. If the degree of blur between the first object 421 and the second object 423 is similar, it may be difficult to implement the digital bokeh effect. Therefore, the at least one processor 120 may perform image processing on the focus region to lower the degree of blur by improving the resolution in the focus region.

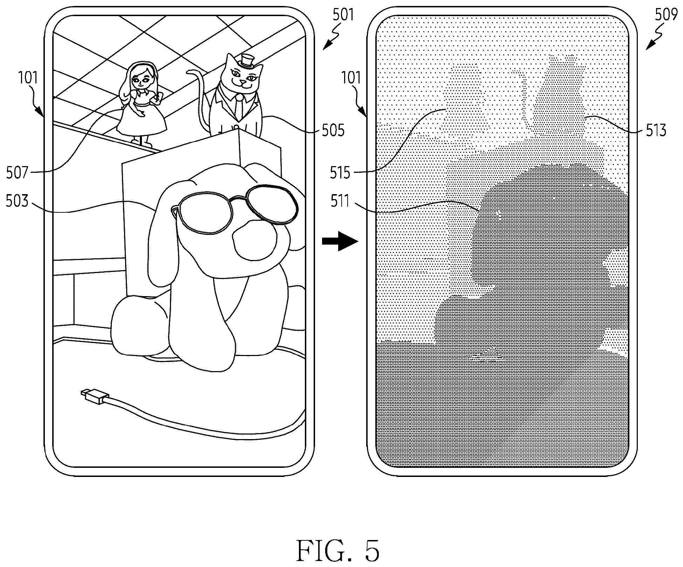

FIG. 5 illustrates an example of a depth map according to embodiments.

Referring to FIG. 5, according to an embodiment, an image 501 may be obtained through a camera. The image 501 may include a first object 503, a second object 505, and a third object 507. The first object 503 may be a portion of the image 501 corresponding to a puppy doll. The second object 505 may be a portion of the image 501 corresponding to a cat doll. The third object 507 may be a portion of the image 501 corresponding to a human doll. A depth map 509 may intuitively represent depth data corresponding to a plurality of objects included in the image 501. At least one processor (e.g., the processor 120 of FIG. 1) may obtain depth data of the first object 503 through a first region 511 of the depth map. The at least one processor 120 may obtain depth data of the second object 505 through a second region 513 of the depth map. The at least one processor 120 may obtain depth data of the third object 507 through a third region 515 of the depth map. In the depth map, a region corresponding to a subject closer to an electronic device (e.g., the electronic device 101 of FIG. 1) may be represented with lower brightness than a region corresponding to a subject far from the electronic device 101.

According to an embodiment, a distance from a subject corresponding to the first object 503 to the electronic device 101 may be closer to a distance from a subject corresponding to the second object 505 to the electronic device 101. The distance from the subject corresponding to the second object 505 to the electronic device 101 may be closer than a distance from a subject corresponding to the third object 507 to the electronic device 101. Therefore, brightness of the first region 511 may be lower than brightness of the second region 513. The brightness of the second region 513 may be lower than brightness of the third region 515. The depth data may be a distance from a subject corresponding to the object to the electronic device 101 including a camera (e.g., the camera 180 of FIG. 1).

According to an embodiment, the depth data may be obtained through various methods. For example, the depth data may be obtained through a depth sensor. The at least one processor 120 may transmit a first signal to obtain the depth data through the depth sensor. The at least one processor 120 may at least partially receive a second signal in which the first signal that is transmitted is reflected by one object of the plurality of objects, through the depth sensor. The depth sensor may be a time of flight (TOF) sensor. For example, the depth data may be obtained based on images obtained from a plurality of cameras. The at least one processor 120 may obtain a first image from a first camera. The at least one processor 120 may obtain a second image from a second camera. The at least one processor 120 may obtain the depth data corresponding to the plurality of objects by comparing the first image and the second image. As a subject is closer to the electronic device 101, a difference between a location of an object corresponding to a subject in the first image and a location of the object corresponding to the subject in the second image may be greater as compared to a subject far from the electronic device 101. For example, the depth data may be identified based on an image obtained through a single camera. The at least one processor 120 may obtain the depth data from the image through the convolution neural network (CNN). However, embodiments of the present disclosure are not limited thereto.

According to an embodiment, the at least one processor 120 may obtain information or identify a region through the depth data. For example, the at least one processor 120 may obtain blur information of the improvement region based on the depth data. The improvement region may correspond to another subject near the subject corresponding to the object. When the blur information of the improvement region is greater than or equal to a reference value, the at least one processor 120 may perform image processing for reducing the blur information on the improvement region. The image processing for reducing the blur information may be performed through a central processing unit (CPU), a neural processing unit (NPU), or a graphics processing unit (GPU).

For example, the at least one processor 120 may identify the improvement region based on the depth data. The improvement region may include an object corresponding to a user input and an improvement object. The at least one processor 120 may identify a distance between the object corresponding to the user input and the electronic device 101 based on the depth map 509. The at least one processor 120 may identify the improvement object. A difference between a distance from the subject corresponding to the object to the electronic device 101 and a distance from a subject corresponding to the improvement object to the electronic device 101 may be less than a second designated distance.

For example, the at least one processor 120 may identify a focus region based on the depth data. The focus region may include the object corresponding to the user input and a focus object. The at least one processor 120 may identify the distance between the object corresponding to the user input and the electronic device 101 based on the depth map 509. The at least one processor 120 may identify the focus object. A difference between the distance from the subject corresponding to the object to the electronic device 101 and a distance from a subject corresponding to the focus object to the electronic device 101 may be less than a first designated distance.

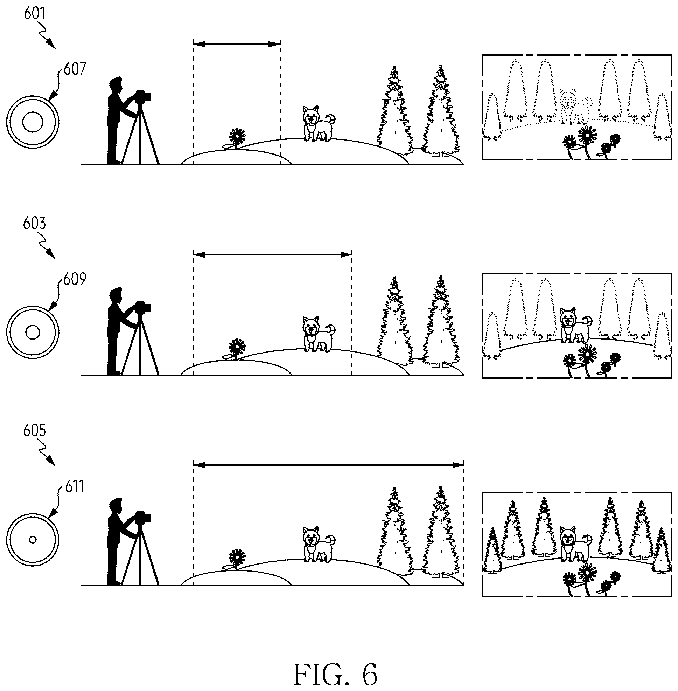

FIG. 6 illustrates an example of a reference distance range for identifying blur information of a focus region, according to embodiments.

Referring to FIG. 6, according to an embodiment, in a state 601, at least one processor (e.g., the processor 120 of FIG. 1) may identify a distance range in which an object is photographed with high sharpness according to a f-number of an aperture 607, a size of a sensor (e.g., a charge coupled device (CCD)) and a focal length of a lens. For example, the f-number of the aperture 607 may be 2.8. In a state 603, the at least one processor 120 may identify a distance range in which an object is photographed with high clarity according to a f-number of an aperture 609, a size of the sensor (e.g., the charge coupled device (CCD)) and a focal length of the lens. For example, the f-number of the aperture 609 may be 5.6. In a state 605, the at least one processor 120 may identify a distance range in which an object is photographed with high clarity according to a f-number of an aperture 611, a size of the sensor (e.g., the charge coupled device (CCD)) and a focal length of the lens. For example, the f-number of the aperture 611 may be 11.

According to an embodiment, a degree of blur due to an optical cause of the object included in the image may be determined by a distance between an electronic device (e.g., the electronic device 101 of FIG. 1) and a subject corresponding to the object. The distance between the electronic device 101 and the subject corresponding to the object may be referred to as a distance of the object. When the lens focuses on a specific subject, another subject within a certain distance range from the subject may also be focused. The certain distance range in which the other subject is also focused may be referred to as a depth of field. The distance between the subject corresponding to the object and the electronic device 101 may be outside the depth of field. When the distance of the object is out of the depth of field, the object may be represented as blurry.

According to an embodiment, a distance range of the object in which sharpness of the subject is photographed equal to or greater than a designated value may be referred to as a first reference distance range. The first reference distance range may be identified by the depth of the field. The depth of field may be identified based on an aperture value, a focal length of the camera in use, and a distance between the subject in focus and the electronic device 101. For example, as an amount of light passed by the aperture increases, the depth of field of field may be narrower. In other words, when the f-number of the aperture is lowered, the depth of the field may be narrower. For example, the focal length of the camera in user increases, the depth of field may be narrower. In other words, as the camera has higher magnification, the depth of field may be narrower. For example, as the distance between the subject in focus and the electronic device 101 increases, the depth of field may be wider. In other words, the depth of field may be wider as the focus is on an object far from the electronic device.

According to an embodiment, in the state 601, a distance from the electronic device 101 to a flower may be within a depth of field range. A distance from the electronic device 101 to a dog may be outside the depth of field range. A distance from the electronic device 101 to a tree may be outside the depth of field range. Therefore, sharpness of an object corresponding to the flower in the obtained image may be equal to or greater than the designated value. Sharpness of an object corresponding to the dog may be less than the designated value. Sharpness of an object corresponding to the tree may be less than the designated value. In other words, the object corresponding to the flower in the obtained image may be obtained relatively clearly. The object corresponding to the dog and the object corresponding to the tree may be obtained blurry. When the distance of the object is outside the depth of field range, the object may be blurred due to the optical cause.

According to an embodiment, in the state 603, the distance from the electronic device 101 to the flower may be within the depth of field range. The distance from the electronic device 101 to the dog may be within the depth of field range. The distance from the electronic device 101 to the tree may be outside the depth of field range. Therefore, the sharpness of the object corresponding to the flower in the obtained image may be equal to or greater than the designated value. The sharpness of the object corresponding to the dog may be equal to or greater than the designated value. The sharpness of the object corresponding to the tree may be less than the designated value. In other words, the object corresponding to the flower and the object corresponding to the dog in the obtained image may be obtained relatively clearly, and the object corresponding to the tree may be obtained blurry.

According to an embodiment, in the state 605, the distance from the electronic device 101 to the flower may be within the depth of field range. The distance from the electronic device 101 to the dog may be within the depth of field range. The distance from the electronic device 101 to the tree may be within the depth of field range. Therefore, the sharpness of the object corresponding to the flower in the obtained image may be equal to or greater than the designated value. The sharpness of the object corresponding to the dog may be equal to or greater than the designated value. The sharpness of the object corresponding to the tree may be equal to or greater than the designated value. In other words, the object corresponding to the flower, the object corresponding to the dog, and the object corresponding to the tree in the obtained image may all be obtained clearly.

According to an embodiment, in the state 601, the f-number of the aperture 607 may be 2.8. In the state 603, the f-number of the aperture 609 may be 5.6. A depth of field identified by the f-number of the aperture 607 may be shallower than a depth of field identified by the f-number of the aperture 609. In the state 603, the f-number of the aperture 609 may be 5.6. In the state 605, the f-number of the aperture 611 may be 11. The depth of field identified by the f-number of the aperture 609 may be shallower than a depth of field identified by the f-number of the aperture 611. This is because an amount of light passed by an aperture increases, a depth of field of field may be narrower.

According to an embodiment, the at least one processor 120 may identify whether blur information of the object is equal to or greater than the designated value according to the distance of the object. Therefore, when the distance of the object is within a depth of field (e.g., the first reference distance range), the at least one processor 120 may determine that blur information is equal to or greater than the designated value and perform image processing to lower blur information. The image processing to lower the blur information may be performed to increase resolution. The image processing to lower the blur information may be performed through a central processing unit (CPU), a neural processing unit (NPU), or a graphics processing unit (GPU).

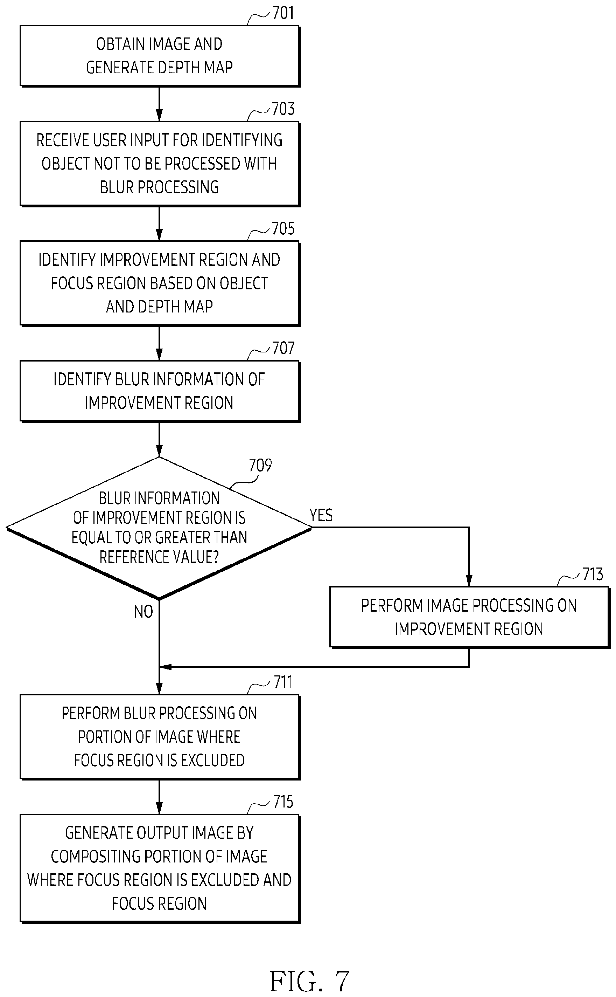

FIG. 7 illustrates a flow of an operation of an electronic device for generating an output image based on blur information of a focus region, according to embodiments.

In the following embodiment, each operation may be sequentially performed, but is not necessarily performed sequentially. For example, an order of each operation may be changed, and at least two operations may be performed in parallel.

According to an embodiment, operations 701 to 715 may be understood as being performed by a processor (e.g., the processor 120 of FIG. 1) of the electronic device (e.g., the electronic device 101 of FIG. 1).

Referring to FIG. 7, according to an embodiment, in the operation 701, at least one processor (e.g., the processor 120 of FIG. 1) may obtain an image and generate a depth map. According to an embodiment, the at least one processor 120 may generate a depth map including depth data corresponding to a plurality of objects. For example, the at least one processor 120 may obtain a depth map including depth data corresponding to a first object (e.g., the first object 303 of FIG. 3), depth data corresponding to a second object (e.g., the second object 305 of FIG. 3), and depth data corresponding to a third object (e.g., one of the objects in the background region 307 of FIG. 3). The at least one processor 120 may obtain the depth data corresponding to the plurality of objects included in the image through the depth map. The depth data may be a distance from a subject corresponding to the object to an electronic device (e.g., the electronic device 101 of FIG. 1) including a camera (e.g., the camera module 180 of FIG. 1). The depth data may be obtained through a depth sensor. For example, the at least one processor 120 may transmit a first signal through the depth sensor to obtain the depth data. The at least one processor 120 may at least partially receive a second signal, in which the first signal that is transmitted is reflected by one object of the plurality of objects, through the depth sensor. The depth sensor may be a time of flight (TOF) sensor. For example, the depth data may be obtained based on images obtained from a plurality of cameras. The at least one processor 120 may obtain a first image from a first camera. The at least one processor 120 may obtain a second image from a second camera. The at least one processor 120 may obtain the depth data corresponding to the plurality of objects by comparing the first image and the second image. As a subject is closer to the electronic device 101, a difference between a location of an object corresponding to a subject in the first image and a location of the object corresponding to the subject in the second image may be greater as compared to a subject far from the electronic device 101. For example, the depth data may be identified based on an image obtained through a single camera. The at least one processor 120 may obtain the depth data from the image through the convolution neural network (CNN). However, embodiments of the present disclosure are not limited thereto.

According to an embodiment, in the operation 703, the at least one processor 120 may receive a user input for identifying an object not to be processed with blur processing. For example, the user may touch a region on a display corresponding to a first object (e.g., the first object 303 of FIG. 3). The first object 303 may be designated as the object not to be processed with the blur processing among the plurality of objects included in the image. The first object 303 may be designated as an object that seems to be in focus in digital bokeh. The digital bokeh may be an image processing method that performs blur processing on a portion of the obtained image to represent the image as if only a portion of the objects within the image are in focus.

According to an embodiment, in the operation 705, the at least one processor 120 may identify an improvement region and a focus region based on the object and the depth map. According to an embodiment, the at least one processor 120 may identify the improvement region based on the object corresponding to the user input and the depth map. The improvement region may include the object and an improvement object. The improvement region may be a portion of the image on which image processing is performed to increase resolution. Performing the image processing on the improvement region is for outputting a high-resolution image for another subject near the subject corresponding to the object. In addition, time efficiency may be secured by performing the image processing to increase resolution for a partial region rather than the entire image. This is because the image processing for increasing the resolution may not be performed on a portion of the image to be processed with the blur processing. The at least one processor 120 may identify a distance of the object corresponding to the received user input based on the depth map. The at least one processor 120 may identify the improvement object. A difference between a distance from the subject corresponding to the object to the electronic device 101 and a distance from a subject corresponding to the improvement object to the electronic device 101 may be less than a second designated distance.

According to an embodiment, the at least one processor 120 may identify the focus region based on the object corresponding to the user input and the depth map. The focus region may include the object and a focus object. The at least one processor 120 may identify a distance of the object corresponding to the received user input based on the depth map. The at least one processor 120 may identify the focus object. A difference between the distance from the subject corresponding to the object to the electronic device 101 and a distance from a subject corresponding to the focus object to the electronic device 101 may be less than a first designated distance.

According to an embodiment, in the operation 707, the at least one processor 120 may identify blur information of the improvement region. According to an embodiment, the at least one processor 120 may identify the blur information based on an edge characteristic of a pixel included in the image. The blur information may include a degree of blur. The edge may be an index indicating how much the color change varies compared to an adjacent pixel. The value of the edge may be greater as the color change is more diverse compared to the adjacent pixel. The edge characteristic may include an intensity of the edge and consistency of the edge direction. The intensity of the edge may be an index indicating how many edges having a large change between a corresponding pixel and the adjacent pixel are included. As the color change between adjacent pixels is greater, the intensity of the edge may be greater. Accordingly, the intensity of the edge of the corresponding pixel may be determined according to magnitude of gradients of the corresponding pixel. The intensity of the edge may be identified based on magnitude of gradients in a first direction of the pixel included in the image and the adjacent pixel, and magnitude of the gradients in a second direction perpendicular to the first direction. As the magnitude of the gradients in the first direction and the magnitude of the gradients in the second direction are greater, the degree of blur may be lower. The consistency of the edge direction may be an index indicating how consistently the edges included in the corresponding pixel and the adjacent pixel face the same direction. The edge direction may be orthogonal to the gradients. Therefore, when a direction of the gradients is consistent, the edge direction may also be consistent. The consistency of the edge direction may be identified according to distribution of the gradients in the first direction of the pixel and the adjacent pixel and distribution of the gradients in the second direction perpendicular to the first direction. As the consistency of the gradients in the first direction is greater, the consistency of the edge direction may be higher. As the consistency of the gradients in the second direction is greater, the consistency with the edge direction may be higher. As the consistency of the edge direction is higher, the degree of blur may be higher. As the consistency of the edge direction is higher, a probability that the corresponding blur is generated by movement of the subject may be higher.

According to an embodiment, the at least one processor 120 may identify blur information based on the distance of the object. When the subject corresponding to the object is within a first reference distance range, sharpness of the object having a distance within the first distance range may be equal to or greater than a designated value. When the subject corresponding to the object is outside the first reference distance range, sharpness of the object having a distance outside the first distance range may be less than the designated value. When the distance of the object corresponding to the user input from the electronic device 101 is within the first reference distance range, the at least one processor 120 may identify the blur information of the improvement region to be less than the reference value. When the distance of the object corresponding to the user input from the electronic device 101 is outside the first reference distance range, the at least one processor 120 may identify the blur information of the improvement region to be equal to or greater than the reference value. The first reference distance range may be identified based on a depth of field and a distance from the subject in focus to the electronic device 101. The distance of the object may be a distance from the subject corresponding to the object to the electronic device 101. The first reference distance range may be identified based on an aperture value, a focal length of the camera in use, and the distance between the subject in focus and the electronic device 101.

According to an embodiment, in the operation 709, the at least one processor 120 may identify whether the blur information of the improvement region is equal to or greater than the reference value. The at least one processor 120 may perform the operation 713 when the blur information of the improvement region is equal to or greater than the reference value. The at least one processor 120 may perform the operation 711 when the blur information of the improvement region is less than the reference value. This is because an operation performed varies according to whether the improvement region requires image processing to improve the resolution.

According to an embodiment, in the operation 711, the at least one processor 120 may perform blur processing on a portion of the image where the focus region is excluded. According to an embodiment, the at least one processor 120 may perform blur processing with a stronger intensity on an object corresponding to a subject whose distance to the electronic device 101 is farther. An intensity of the blur processing may be a degree of blur. As the intensity of the blur processing is stronger, the image processed with the blur processing may be represented as blurry. For example, the image processed with the blur processing with a first intensity may be blurrier compared to the image processed with the blur processing with a second intensity smaller than the first intensity. For example, the at least one processor 120 may perform the blur processing on a first subject corresponding to a first image portion with the first intensity. The at least one processor 120 may perform the blur processing on a second subject corresponding to a second image portion with the second intensity smaller than the first intensity. The first subject may be separated from the electronic device 101 by a first distance. The second subject may be separated from the electronic device 101 by a second distance. The first distance may be greater than the second distance.

According to an embodiment, in the operation 713, the at least one processor 120 may perform image processing on the improvement region. According to an embodiment, the at least one processor 120 may perform image processing to reduce the blur information on the improvement region based on the blur information equal to or greater than the reference value. The at least one processor 120 may perform the image processing to reduce the blur information through a neural network. The image processing to reduce the blur information on the improvement region may be executed through a central processing unit (CPU), a neural processing unit (NPU), or a graphics processing unit (GPU).

According to an embodiment, in the operation 715, the at least one processor 120 may generate an output image by compositing the portion of the image where the focus region is excluded and the focus region. The at least one processor 120 may generate the output image in which sharpness of the focus region is higher compared to sharpness of a portion that is not the focus region. The at least one processor 120 may generate the output image by performing image processing for increasing resolution on the improvement region around the object designated by the user. The at least one processor 120 may obtain the output image having relatively high sharpness with respect to the focus region around the object designated by the user.

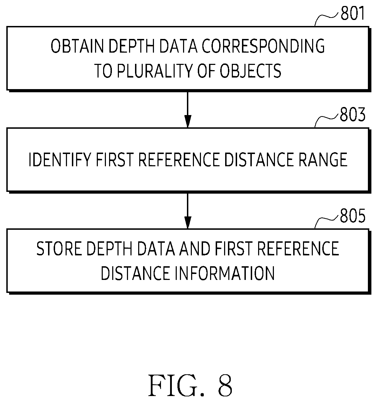

FIG. 8 illustrates a flow of an operation of an electronic device for identifying blur information when obtaining an image, according to embodiments.

In the following embodiment, each operation may be performed sequentially, but is not necessarily performed sequentially. For example, an order of each operation may be changed, and at least two operations may be performed in parallel.

According to an embodiment, operations 801 to 805 may be understood as being performed by a processor (e.g., the processor 120 of FIG. 1) of the electronic device (e.g., the electronic device 101 of FIG. 1).

Referring to FIG. 8, according to an embodiment, in the operation 801, at least one processor (e.g., the processor 120 of FIG. 1) may obtain depth data corresponding to a plurality of objects. For example, the depth data may be obtained by a depth sensor. As another example, the depth data may be identified by an image obtained from a plurality of cameras. The depth data may be obtained by inputting an image obtained from a single camera into a neural network.

According to an embodiment, in the operation 803, the at least one processor 120 may identify a first reference distance range. Sharpness of an object corresponding to a subject disposed in the first reference distance range may be equal to or greater than a designated value. The first reference distance range may be identified based on an aperture value, a focal length of at least one camera in use, and a distance between the subject in focus and the electronic device. For example, the first reference distance range may be wider as a f-number of an aperture is greater. As another example, the first reference distance range may be narrower as a focal length of a camera is greater. In other words, as the camera has higher magnification, the depth of the field may be narrower. As another example, as a distance between the subject in focus and the electronic device increases, the depth of field of field may be wider.

According to an embodiment, in operation 805, the at least one processor 120 may store the depth data and first reference distance information. According to an embodiment, the at least one processor 120 may obtain information or identify a region based on the stored depth data and the first reference distance information. For example, the at least one processor 120 may obtain blur information of the improvement region based on the depth data. For example, the at least one processor 120 may identify the improvement region based on the depth data. For example, the at least one processor 120 may identify a focus region based on the depth data.

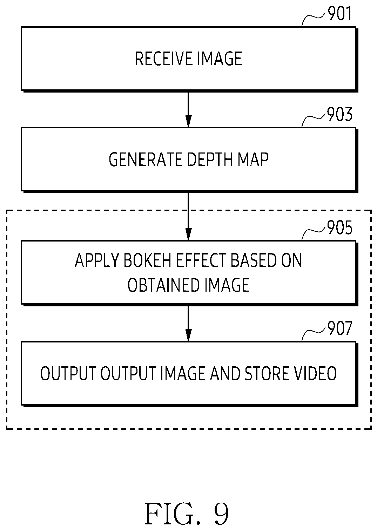

FIG. 9 illustrates a flow of an operation of an electronic device for performing digital bokeh when obtaining an image, according to embodiments.

In the following embodiment, each operation may be performed sequentially, but is not necessarily performed sequentially. For example, an order of each operation may be changed, and at least two operations may be performed in parallel.

According to an embodiment, operations 901 to 907 may be understood as being performed by a processor (e.g., the processor 120 of FIG. 1) of the electronic device (e.g., the electronic device 101 of FIG. 1).

Referring to FIG. 9, according to an embodiment, in the operation 901, at least one processor (e.g., the processor 120 of FIG. 1) may receive an image. The at least one processor 120 may receive the image based on a camera (e.g., the camera module 180 of FIG. 1).

According to an embodiment, in the operation 903, the at least one processor 120 may generate a depth map. The depth map may include depth data corresponding to a plurality of objects in the image. The depth data may be a distance from a subject corresponding to an object to the electronic device 101 including the camera 180. According to an embodiment, the depth data may be obtained through a depth sensor. The depth sensor may be a time of flight (TOF) sensor. According to an embodiment, the depth data may be obtained based on images obtained from a plurality of cameras. The at least one processor 120 may obtain a first image from a first camera. The at least one processor 120 may obtain a second image from a second camera. The at least one processor 120 may obtain the depth data corresponding to the plurality of objects by comparing the first image and the second image. As a subject is closer to the electronic device 101, a difference between a location of an object corresponding to a subject in the first image and a location of the object corresponding to the subject in the second image may be greater as compared to a subject far from the electronic device 101. For example, the depth data may be identified based on an image obtained through a single camera. The at least one processor 120 may obtain the depth data from the image through the convolution neural network (CNN). However, embodiments of the present disclosure are not limited thereto.

According to an embodiment, in the operation 905, the at least one processor 120 may apply a bokeh effect based on the obtained image. According to an embodiment, the at least one processor 120 may receive a user input for identifying an object not to be processed with blur processing among the plurality of objects. According to an embodiment, the at least one processor 120 may identify an improvement region based on the object corresponding to the user input and the depth map. According to an embodiment, the at least one processor 120 may identify a focus region based on the object corresponding to the user input and the depth map. The improvement region may be a portion of the image for performing image processing for increasing resolution. The improvement region may be the same as the focus region. However, it is not limited thereto. According to an embodiment, the at least one processor 120 may identify the focus region based on the object corresponding to the user input and the depth map. According to this configuration, the at least one processor 120 may determine whether blur information of the improvement region is equal to or greater than a reference value. For example, the at least one processor 120 may identify the blur information based on an edge characteristic of a pixel included in the image. For example, the at least one processor 120 may identify the blur information based on a distance of the object. When the distance of the object corresponding to the user input from the electronic device 101 is within a first reference distance range, the at least one processor 120 may identify the blur information of the improvement region to be less than the reference value. When the distance of the object corresponding to the user input from the electronic device 101 is outside the first reference distance range, the at least one processor 120 may identify the blur information of the improvement region to be equal to or greater than the reference value. According to an embodiment, the at least one processor 120 may perform image processing for reducing the blur information on the improvement region based on the blur information equal to or greater than the reference value. According to an embodiment, the at least one processor 120 may perform the blur processing on a portion of the image where the focus region is excluded. The at least one processor 120 may generate an output image by compositing the portion of the image where the focus region is excluded and the focus region.

According to an embodiment, in the operation 907, the at least one processor 120 may output the output image and store a video. The at least one processor 120 may output the output image on a display. The digital bokeh effect may also be applied to a frame included in the video. In case of the video, the at least one processor 120 may store a depth of a subject in focus and a depth of field together for each frame.

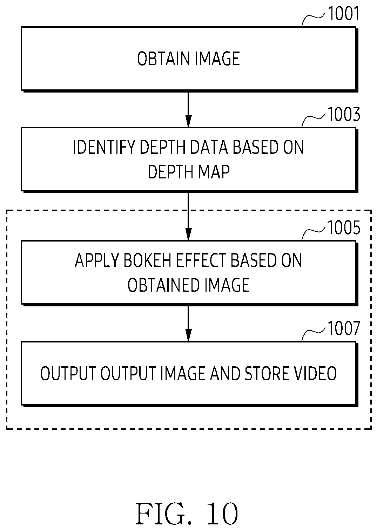

FIG. 10 illustrates a flow of an operation of an electronic device for performing digital bokeh after obtaining an image, according to embodiments.

In the following embodiment, each operation may be performed sequentially, but is not necessarily performed sequentially. For example, an order of each operation may be changed, and at least two operations may be performed in parallel.

According to an embodiment, operations 1001 to 1007 may be understood as being performed by a processor (e.g., the processor 120 of FIG. 1) of the electronic device (e.g., the electronic device 101 of FIG. 1).

Referring to FIG. 10, according to an embodiment, in the operation 1001, the at least one processor 120 may obtain an image. The at least one processor 120 may obtain the image based on a camera (e.g., the camera module 180 of FIG. 1).

According to an embodiment, in the operation 1003, the at least one processor 120 may identify depth data based on a depth map. The depth map may include depth data corresponding to a plurality of objects in the image. The depth data may be a distance from a subject corresponding to an object to the electronic device 101 including the camera 180. The at least one processor 120 may identify the depth data of the subject corresponding to the object based on the stored depth map.

According to an embodiment, in the operation 1005, the at least one processor 120 may apply a bokeh effect based on the obtained image.

According to an embodiment, the at least one processor 120 may receive a user input for identifying an object not to be processed with blur processing among the plurality of objects. According to an embodiment, the at least one processor 120 may identify an improvement region based on the object corresponding to the user input and the depth map. According to an embodiment, the at least one processor 120 may identify a focus region based on the object corresponding to the user input and the depth map. According to an embodiment, the at least one processor 120 may determine whether the blur information of the improvement region is equal to or greater than a reference value. According to an embodiment, the at least one processor 120 may perform image processing for reducing the blur information on the improvement region based on the blur information equal to or greater than the reference value. According to an embodiment, the at least one processor 120 may perform blur processing on a portion of the image where the focus region is excluded. The at least one processor 120 may generate an output image by compositing the portion of the image where the focus region is excluded and the focus region.

According to an embodiment, in the operation 1007, the at least one processor 120 may output the output image and store a video. The at least one processor 120 may output the output image and store the image. The at least one processor 120 may output the output image on a display. The digital bokeh effect may also be applied to a frame included in the video.

According to an embodiment, the operation 905 of FIG. 9 for applying the digital bokeh effect to the image may be executed while obtaining the image before the image is stored in memory. According to another embodiment, the operation 1005 of FIG. 10 for applying the digital bokeh effect to the image may be executed after the image is stored in the memory. Accordingly, embodiments according to the present disclosure may be applied to both before and after the image is obtained.

As described above, according to embodiments, an electronic device 101 is provided. The electronic device may comprise at least one processor 120, and at least one camera 180. The at least one processor 120 may be configured to obtain an image 301, 401, 413, or 501 via the at least one camera 180. The at least one processor 120 may be configured to generate a depth map 509 including depth data corresponding to a plurality of objects. The at least one processor 120 may be configured to receive a user input for identifying an object not to be processed with blur processing among the plurality of objects. The at least one processor 120 may be configured to identify an improvement region based on the object corresponding to the user input and the depth map 509. The at least one processor 120 may be configured to identify a focus region based on the object corresponding to the user input and the depth map 509. The at least one processor 120 may be configured to determine whether blur information of the improvement region is equal to or greater than a reference value. The at least one processor 120 may be configured to perform image processing to reduce the blur information of the improvement region based on the blur information being equal to or greater than the reference value. The at least one processor 120 may be configured to perform blur processing on a portion of the image where the focus region is excluded. The at least one processor 120 may be configured to generate an output image 309 based on a composite of the portion of the image where the focus region is excluded and the focus region.

According to an embodiment, in order to perform the image processing to reduce the blur information of the improvement region, it may be configured to perform the image processing through a neural processing unit (NPU) to increase resolution in the improvement region.

According to an embodiment, in order to determine whether the blur information of the improvement region is equal to or greater than the reference value, the at least one processor 120 may be configured to identify the blur information based on an edge characteristic of a pixel included in the image. The edge characteristic may include an intensity of an edge and consistency of an edge direction. The intensity of the edge may be identified based on magnitude of gradients in a first direction of the pixel included in the image and a surrounding pixel, and magnitude of gradients in a second direction perpendicular to the first direction. The consistency of the edge direction may be identified based on distribution of the gradients in the first direction of the pixel and the surrounding pixel ,and distribution of the gradients in the second direction perpendicular to the first direction.

According to an embodiment, in order to determine whether the blur information of the improvement region is equal to or greater than the reference value, the at least one processor 120 may be configured to determine whether a distance from the electronic device 101 to the object corresponding to the user input is within a first reference distance range. The at least one processor 120 may be configured to, in order to determine whether the blur information of the improvement region is equal to or greater than the reference value, identify the blur information of the improvement region to be less than the reference value in a case that the distance from the electronic device to the object corresponding to the user input is within the first reference distance range. The at least one processor 120 may be configured to, in order to determine whether the blur information of the improvement region is equal to or greater than the reference value, identify the blur information of the improvement region to be equal to or greater than the reference value in a case that the distance from the electronic device to the object corresponding to the user input is outside the first reference distance range. The distance of the object may be a distance from a subject corresponding to the object to the electronic device 101. The first reference distance range may be identified based on an aperture value, a focal length of the at least one camera 180 in use, and a distance between the subject in focus and the electronic device.

According to an embodiment, in order to identify the focus region based on the received user input and the depth map 509, the at least one processor 120 may be configured to identify a distance of the object corresponding to the received user input. The at least one processor 120 may be configured to identify a focus object of which a difference between a distance of the focus object and the distance of the object is less than a first designated distance. The distance of the object may be a distance from a subject corresponding to the object to the electronic device 101. The distance of the focus object may be a distance from a subject corresponding to the focus object to the electronic device 101. The focus region may include both the object and the focus object.

According to an embodiment, in order to generate the depth map 509 including the depth data corresponding to the plurality of objects, the at least one processor 120 may be configured to receive, through a depth sensor, a second signal in which a first signal that is transmitted through the depth sensor is reflected by one object of the plurality of obj ects. The depth data corresponding to the one object of the plurality of objects may be obtained based on a time interval between transmission of the first signal and reception of the second signal.

According to an embodiment, in order to generate the depth map 509 including the depth data corresponding to the plurality of objects, the at least one processor 120 may be configured to obtain a first image via a first camera 180. The at least one processor 120 may be configured to obtain a second image via a second camera 180. The at least one processor 120 may be configured to obtain the depth data corresponding to the plurality of objects by comparing the first image and the second image.

According to an embodiment, in order to perform the blur processing on the portion of the image where the focus region is excluded, the at least one processor 120 may be configured to perform blur processing on a first subject corresponding to a first portion of the image with a first intensity. The at least one processor 120 may be configured to perform blur processing on a second subject corresponding to a second portion of the image with a second intensity. The first subject may be located at a first distance from the electronic device, The second subject may be located at a second distance from the electronic device. The first distance may be greater than the second distance. The first intensity may be greater than the second intensity.

According to an embodiment, the at least one processor 120 may be further configured to generate the depth map 509, including the depth data corresponding to the plurality of objects, while obtaining the image via the at least one camera 180. The at least one processor 120 may be further configured to determine whether a distance of the object is outside a second reference distance range. The at least one processor 120 may be further configured to display a notification for indicating a difficulty of applying a bokeh effect based on determining that the distance of the object is outside the second reference distance range. The distance of the object may be a distance from a subject corresponding to the object to the electronic device 101. The second reference distance range may include the first reference distance range.

According to an embodiment, the at least one processor 120 may be further configured to obtain the image via the at least one camera 180. The at least one processor 120 may be further configured to identify the distance of the object within the image obtained via the at least one camera 180. The at least one processor 120 may be further configured to display a notification, based on determining that the distance of the object is outside the first reference distance range and is within the second reference distance range. The notification may indicate that image processing is required for resolution improvement when applying a digital bokeh effect. The at least one processor 120 may be further configured to display a notification indicating that the applying the digital bokeh effect is difficult, based on determining that the distance of the object is outside the second reference distance range. The distance of the object may be the distance from a subject corresponding to the object to the electronic device 101. The second reference distance range may include the first reference distance range.

As described above, according to an embodiment, a method performed by an electronic device is provided. The method may comprise obtaining an image via at least one camera 180. The method may comprise generating a depth map 509 including depth data corresponding to a plurality of objects. The method may comprise receiving a user input for identifying an object not to be processed with blur processing among the plurality of objects. The method may comprise identifying an improvement region based on the object corresponding to the user input and the depth map 509. The method may comprise identifying a focus region based on the object corresponding to the user input and the depth map 509. The method may comprise determining whether blur information of the improvement region is equal to or greater than a reference value. The method may comprise performing image processing to reduce the blur information of the improvement region, based on the blur information being equal to or greater than the reference value. The method may comprise performing blur processing on a portion of the image where the focus region is excluded. The method may comprise generating an output image 309 based on a composite of the portion of the image where the focus region is excluded and the focus region.

According to an embodiment, performing the image processing to reduce the blur information of the improvement region may include performing the image processing through a neural processing unit (NPU) to increase resolution in the improvement region.

According to an embodiment, the determining whether the blur information of the improvement region is equal to or greater than the reference value may comprise identifying the blur information based on an edge characteristic of a pixel included in the image. The edge characteristic may include an intensity of an edge and consistency of an edge direction. The intensity of the edge may be identified based on magnitude of gradients in a first direction of the pixel included in the image and a surrounding pixel, and magnitude of gradients in a second direction perpendicular to the first direction. The consistency of the edge direction may be identified based on distribution of the gradients in the first direction of the pixel and the surrounding pixel, and distribution of the gradients in the second direction perpendicular to the first direction.

According to an embodiment, the determining whether the blur information of the improvement region is equal to or greater than the reference value may comprise determining whether a distance from the electronic device 101 to the object corresponding to the user input is within a first reference distance range. The determining whether the blur information of the improvement region is equal to or greater than the reference value may comprise identifying the blur information of the improvement region to be less than the reference value in a case that the distance from the electronic device to the object corresponding to the user input is within the first reference distance range. The determining whether the blur information of the improvement region is equal to or greater than the reference value may comprise identifying the blur information of the improvement region to be equal to or greater than the reference value in a case that the distance from the electronic device to the object corresponding to the user input is outside the first reference distance range. The distance of the object may be a distance from a subject corresponding to the object to the electronic device 101. The first reference distance range may be identified based on an aperture value, a focal length of the at least one camera 180 in use, and a distance between the subject in focus and the electronic device.

According to an embodiment, the identifying the focus region based on the received user input and the depth map 509 may comprise identifying a distance of the object corresponding to the received user input. The identifying the focus region based on the received user input and the depth map 509 may comprise identifying a focus object of which a difference between a distance of the focus object and the distance of the object is less than a first designated distance. The distance of the object may be a distance from a subject corresponding to the object to the electronic device 101. The distance of the focus object may be a distance from a subject corresponding to the focus object to the electronic device 101. The focus region may include both the object and the focus object.

According to an embodiment, the generating the depth map 509 including the depth data corresponding to the plurality of objects may comprise receiving, through a depth sensor, a second signal in which a first signal that is transmitted through the depth sensor is reflected by one object of the plurality of objects. The depth data corresponding to the one object of the plurality of objects may be obtained based on a time interval between transmission of the first signal and reception of the second signal.

According to an embodiment, the generating the depth map 509 including the depth data corresponding to the plurality of objects may comprise obtaining a first image via a first camera 180. According to an embodiment, the generating the depth map 509 including the depth data corresponding to the plurality of objects may comprise obtaining a second image via a second camera 180. According to an embodiment, the generating the depth map 509 including the depth data corresponding to the plurality of obj ects may comprise obtaining the depth data corresponding to the plurality of objects by comparing the first image and the second image.

According to an embodiment, the performing the blur processing on the portion of the image where the focus region is excluded may comprise performing blur processing on a first subject corresponding to a first portion of the image with a first intensity. According to an embodiment, the performing the blur processing on the portion of the image where the focus region is excluded may comprise performing blur processing on a second subject corresponding to a second portion of the image with a second intensity. The first subject may be located at a first distance from the electronic device, The second subject may be located at a second distance from the electronic device. The first distance may be greater than the second distance. The first intensity may be greater than the second intensity.

According to an embodiment, the method may further comprise generating the depth map 509, including the depth data corresponding to the plurality of objects, while obtaining the image via the at least one camera 180. The method may further comprise determining whether a distance of the object is outside a second reference distance range. The method may further comprise displaying a notification for indicating a difficulty of applying a bokeh effect based on determining that the distance of the object is outside the second reference distance range. The distance of the object may be a distance from a subject corresponding to the object to the electronic device 101. The second reference distance range may include the first reference distance range.

According to an embodiment, the method may further comprise obtaining the image via the at least one camera 180. The method may further comprise identifying the distance of the object within the image obtained via the at least one camera 180. The method may further comprise displaying a notification, based on determining that the distance of the object is outside the first reference distance range and is within the second reference distance range. The notification may indicate that image processing is required for resolution improvement when applying a digital bokeh effect. The method may further comprise displaying a notification indicating that the applying the digital bokeh effect is difficult, based on determining that the distance of the object is outside the second reference distance range. The distance of the object may be the distance from a subject corresponding to the object to the electronic device 101. The second reference distance range may include the first reference distance range.

In embodiments, an electronic device is provided. The electronic device may include memory configured to store instructions, at least one processor, and at least one camera. The instructions, when executed by the at least one processor, may cause the electronic device to obtain an image via the at least one camera, generate a depth map including depth data corresponding to a plurality of objects, receive a user input for identifying an object not to be processed with blur processing among the plurality of objects, identify an improvement region based on the object corresponding to the user input and the depth map, identify a focus region based on the object corresponding to the user input and the depth map, identify whether blur information of the improvement region is equal to or greater than a reference value, perform image processing to reduce the blur information of the improvement region based on the blur information being equal to or greater than the reference value, perform blur processing on a portion of the image where the focus region is excluded, and generate an output image based on a composite of the portion of the image where the focus region is excluded and the focus region.

In embodiments, a non-transitory computer-readable medium is provided. The non-transitory computer-readable medium may include memory configured to store instructions. The instructions, when executed by the at least one processor, may cause the electronic device to obtain an image via the at least one camera, generate a depth map including depth data corresponding to a plurality of objects, receive a user input for identifying an object not to be processed with blur processing among the plurality of objects, identify an improvement region based on the object corresponding to the user input and the depth map, identify a focus region based on the object corresponding to the user input and the depth map, identify whether blur information of the improvement region is equal to or greater than a reference value, perform image processing to reduce the blur information of the improvement region based on the blur information being equal to or greater than the reference value, perform blur processing on a portion of the image where the focus region is excluded, and generate an output image based on a composite of the portion of the image where the focus region is excluded and the focus region.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101) comprising:
at least one processor (120), and
at least one camera (180),
wherein the at least one processor (120) is configured to:
obtain an image (301; 401; 413; 501) via the at least one camera (180);
generate a depth map (509) including depth data corresponding to a plurality of objects;
receive a user input for identifying an object not to be processed with blur processing among the plurality of objects;
identify an improvement region based on the object corresponding to the user input and the depth map (509);
identify a focus region based on the object corresponding to the user input and the depth map (509);
determine whether blur information of the improvement region is equal to or greater than a reference value;
perform image processing to reduce the blur information of the improvement region based on the blur information being equal to or greater than the reference value;
perform blur processing on a portion of the image where the focus region is excluded; and
generate an output image (309) based on a composite of the portion of the image where the focus region is excluded and the focus region.

2. The electronic device of claim 1, wherein, in order to perform the image processing to reduce the blur information of the improvement region, the at least one processor (120) is configured to perform the image processing through a neural processing unit (NPU) to increase resolution in the improvement region.

3. The electronic device of claims 1 to 2, wherein, in order to determine whether the blur information of the improvement region is equal to or greater than the reference value, the at least one processor (120) is configured to:
identify the blur information based on an edge characteristic of a pixel included in the image;
wherein the edge characteristic includes an intensity of an edge and consistency of an edge direction,
wherein the intensity of the edge is identified based on magnitude of gradients in a first direction of the pixel included in the image and a surrounding pixel, and magnitude of gradients in a second direction perpendicular to the first direction, and
wherein the consistency of the edge direction is identified based on distribution of the gradients in the first direction of the pixel and the surrounding pixel ,and distribution of the gradients in the second direction perpendicular to the first direction.

4. The electronic device of claims 1 to 3, wherein, in order to determine whether the blur information of the improvement region is equal to or greater than the reference value, the at least one processor (120) is configured to:
determine whether a distance from the electronic device (101) to the object corresponding to the user input is within a first reference distance range;
identify the blur information of the improvement region to be less than the reference value in a case that the distance from the electronic device to the object corresponding to the user input is within the first reference distance range; and
identify the blur information of the improvement region to be equal to or greater than the reference value in a case that the distance from the electronic device to the object corresponding to the user input is outside the first reference distance range,
wherein the distance of the object is a distance from a subject corresponding to the object to the electronic device (101), and
wherein the first reference distance range is identified based on an aperture value, a focal length of the at least one camera (180) in use, and a distance between a subject in focus and the electronic device.

5. The electronic device of claims 1 to 4, wherein, in order to identify the focus region based on the received user input and the depth map (509), the at least one processor (120) is configured to:
identify a distance of the object corresponding to the received user input, and
identify a focus object of which a difference between a distance of the focus object and the distance of the object is less than a first designated distance, and
wherein the distance of the object is a distance from a subject corresponding to the object to the electronic device (101),
wherein the distance of the focus object is a distance from a subject corresponding to the focus object to the electronic device (101), and
wherein the focus region includes both the object and the focus object.

6. The electronic device of claims 1 to 5, wherein, in order to generate the depth map (509) including the depth data corresponding to the plurality of objects, the at least one processor (120) is configured to:
receive, through a depth sensor, a second signal in which a first signal that is transmitted through the depth sensor is reflected by one object of the plurality of objects, and
obtain the depth data corresponding to the one object of the plurality of objects based on a time interval between transmission of the first signal and reception of the second signal.

7. The electronic device of claims 1 to 6, wherein, in order to generate the depth map (509) including the depth data corresponding to the plurality of objects, the at least one processor (120) is configured to:
obtain a first image via a first camera (180);
obtain a second image via a second camera (180); and
obtain the depth data corresponding to the plurality of objects by comparing the first image and the second image.

8. The electronic device of claims 1 to 7, wherein, in order to perform the blur processing on the portion of the image where the focus region is excluded, the at least one processor (120) is configured to:
perform blur processing on a first subject corresponding to a first portion of the image with a first intensity, and
perform blur processing on a second subject corresponding to a second portion of the image with a second intensity,
wherein the first subject is located at a first distance from the electronic device,
wherein the second subject is located at a second distance from the electronic device,
wherein the first distance is greater than the second distance, and
wherein the first intensity is greater than the second intensity.

9. The electronic device of claims 1 to 8, wherein the at least one processor (120) is further configured to:
generate the depth map (509), including the depth data corresponding to the plurality of objects, while obtaining the image via the at least one camera (180);
determine whether a distance of the object is outside a second reference distance range; and
display a notification for indicating a difficulty of applying a bokeh effect based on determining that the distance of the object is outside the second reference distance range,
wherein the distance of the object is a distance from a subject corresponding to the object to the electronic device (101), and
wherein the second reference distance range includes the first reference distance range.

10. The electronic device of claims 1 to 9, wherein the at least one processor (120) is further configured to:
obtain the image via the at least one camera (180);
identify the distance of the object within the image obtained via the at least one camera (180);
display a notification, based on determining that the distance of the object is outside the first reference distance range and is within the second reference distance range, the notification indicating that image processing is required for resolution improvement when applying a digital bokeh effect; and
display a notification indicating that the applying the digital bokeh effect is difficult, based on determining that the distance of the object is outside the second reference distance range,
wherein the distance of the object is the distance from a subject corresponding to the object to the electronic device (101), and
wherein the second reference distance range includes the first reference distance range.

11. A method performed by an electronic device (101), the method comprising:
obtaining an image via at least one camera (180);
generating a depth map (509) including depth data corresponding to a plurality of objects;
receiving a user input for identifying an object not to be processed with blur processing among the plurality of objects;
identifying an improvement region based on the object corresponding to the user input and the depth map (509);
identifying a focus region based on the object corresponding to the user input and the depth map (509);
determining whether blur information of the improvement region is equal to or greater than a reference value;
performing image processing to reduce the blur information of the improvement region, based on the blur information being equal to or greater than the reference value;
performing blur processing on a portion of the image where the focus region is excluded; and
generating an output image (309) based on a composite of the portion of the image where the focus region is excluded and the focus region.

12. The method of claim 11, wherein performing the image processing to reduce the blur information of the improvement region includes performing the image processing through a neural processing unit (NPU) to increase resolution in the improvement region.

13. The method of claims 11 to 12, wherein determining whether the blur information of the improvement region is equal to or greater than the reference value comprises:
identifying the blur information based on an edge characteristic of a pixel included in the image;
wherein the edge characteristic includes an intensity of an edge and consistency of an edge direction,
wherein the intensity of the edge is identified based on magnitude of gradients in a first direction of the pixel included in the image and a surrounding pixel, and magnitude of gradients in a second direction perpendicular to the first direction, and
wherein the consistency of the edge direction is identified based on distribution of the gradients in the first direction of the pixel and the surrounding pixel, and distribution of the gradients in the second direction perpendicular to the first direction.

14. The method of claims 11 to 13, wherein determining whether the blur information of the improvement region is equal to or greater than the reference value comprises:
determining whether a distance from the electronic device (101) to the object corresponding to the user input is within a first reference distance range;
identifying the blur information of the improvement region to be less than the reference value in a case that the distance from the electronic device to the object corresponding to the user input is within the first reference distance range; and
identifying the blur information of the improvement region to be equal to or greater than the reference value in a case that the distance from the electronic device to the object corresponding to the user input is outside the first reference distance range;
wherein the distance of the object is a distance from a subject corresponding to the object to the electronic device (101), and
wherein the first reference distance range is identified based on an aperture value, a focal length of the at least one camera (180) in use, and a distance between the subject in focus and the electronic device.

15. The method of claims 11 to 14, wherein identifying the focus region based on the received user input and the depth map (509) comprises:
identifying a distance of the object corresponding to the received user input; and
identifying a focus object of which a difference between a distance of the focus object and the distance of the object is less than a first designated distance, and
wherein the distance of the object is a distance from a subject corresponding to the object to the electronic device (101),
wherein the distance of the focus object is a distance from a subject corresponding to the focus object to the electronic device (101), and
wherein the focus region includes both the object and the focus object.
